# EUROPÄISCHE PATENTANMELDUNG

(11) **EP 1 768 232 A2**
(43) Veröffentlichungstag der Anmeldung: **28.03.2007**
(21) Anmeldenummer: 06019524.5
(22) Anmeldetag: 19.09.2006
(51) Int. Cl.: H02K 5/04

(54) **Gehäuse eines Elektromotors**

(30) Priorität: 26.09.2005 DE 102005046120
(71) Anmelder: WILO AG, 44263 Dortmund (DE)
(72) Erfinder: Adler, Andreas, 58239 Schwerte (DE); Klein, Bernhard, 44229 Dortmund (DE)
(74) Vertreter: COHAUSZ DAWIDOWICZ HANNIG & SOZIEN

(57) **Zusammenfassung**

Gehäuse eines Elektromotors, insbesondere für eine Motorkreiselpumpe, wobei das Gehäuse aus Blech gefertigt ist, das durch Tiefziehen in seine Form gebracht wurde, wobei das Gehäuse im Querschnitt senkrecht zu seiner Längsachse einen Vielflach bildet.

## Beschreibung

Die Erfindung betrifft ein Gehäuse eines Elektromotors, insbesondere für eine Motorkreiselpumpe, wobei das Gehäuse aus Blech gefertigt ist, das durch Tiefziehen in seine Form gebracht wurde.

Aus der DE 196 00 639 ist ein Gehäuse eines Elektromotors bekannt, wobei das Gehäuse aus Aluminiumblech besteht, das durch Tiefziehen in seine Form gebracht wurde und einen runden Querschnitt aufweist.

Nachteilig hierbei ist, dass eine relativ große Wandstärke erforderlich ist, um die geforderte Stabilität des tiefgezogenen Gehäuses zu gewährleisten. Dies wiederum führt zu Fertigungsproblemen, da ein großer Kraftaufwand erforderlich ist, um ein solches Gehäuse durch tiefziehen zu fertigen.

Aufgabe der Erfindung ist es, diese Nachteile zu überwinden und ein gattungsgemäßes Gehäuse derart weiterzubilden, dass das durch Tiefziehen gefertigte Elektromotorgehäuse eine größere mechanische Festigkeit, Zähigkeit und Steifigkeit aufweist.

Diese Aufgabe wird erfindungsgemäß dadurch gelöst, dass das Gehäuse eines Elektromotors, insbesondere für eine Motorkreiselpumpe, wobei das Gehäuse aus Blech gefertigt ist, das durch Tiefziehen in seine Form gebracht wurde, im Querschnitt senkrecht zu seiner Längsachse einen Vielflach, bildet.

Dadurch, dass das Elektromotorgehäuse im Querschnitt senkrecht zu seiner Längsachse ein Vielflach ist, weist das erfindungsgemäße Gehäuse eine höhere Festigkeit, Zähigkeit und Steifigkeit auf. Dieses wird auf vorteilhafte Weise erreicht, ohne dass es eines vergrößerten Materialaufwandes bedarf. Im Gegenteil können gegenüber herkömmlichen Elektromotorgehäusen dünnere Wandstärken zum Einsatz kommen, wodurch zusätzlich das Tiefziehen, d.h. die Fertigung vereinfacht werden, indem dünnere Bleche als Vormaterial zum Einsatz kommen können. Durch die erfindungsgemäße Geometrie wird somit in vorteilhafter Weise eine Gehäusestabilisierung herbeigeführt, ohne dass es eines erhöhten Materialaufwandes oder eines erhöhten Fertigungsaufwandes bedarf.

Weitere vorteilhafte Ausgestaltungen der Erfindung sind in den Unteransprüchen angegeben.

So ist es besonders vorteilhaft, wenn der Vielflach im Querschnitt ein regelmäßiges Vieleck ist. Hierdurch wird die Herstellung der benötigten Werkzeuge und die Handhabung des fertig tiefgezogenen Elektromotorgehäuses in einem automatisierten Fertigungsprozess erleichtert.

Vorzugsweise ist am Gehäuse ein Flansch einstückig angeformt. Somit kann ein fertiges und montierbares Elektromotorgehäuse in einem Arbeitsprozess gefertigt werden, ohne dass es einer mechanischen Nachbearbeitung bedarf.

Bevorzugt weist das Gehäuse in Richtung auf seinen Boden eine sich konisch verjüngende Form auf, insbesondere ist der Gehäusemantel unter einem Winkel von 1,5° gegen die Gehäuseachse geneigt. Hierdurch kann der Prozess des Tiefziehens gegenüber einer Gehäuseform mit parallelen Seitenflächen des Vielflachs vereinfacht werden.

Bevorzugt ist an der offenen Seite des Gehäuses zumindest eine Ausnehmung, insbesondere eine Nut vorgesehen ist. Durch eine derartige Ausnehmung oder Nut kann sich gegebenenfalls ansammelndes Kondensat abfließen.

In einer bevorzugten Ausführungsform weist das Gehäuse eine Wandstärke von 0,5 mm bis 2,0 mm, vorzugsweise von 1,0 mm bis 1,5 mm auf.

Vorzugsweise ist am Gehäuse, insbesondere an seinem Flansch ein selbsttragender Spalttopf befestigbar.

Vorteilhaft weist das Gehäuse an seiner Seite, insbesondere an seiner Oberseite, eine Ausnehmung auf, in der ein Kunststoffeinsatz einliegt, auf dem der Klemmenkasten und/oder ein Elektronik enthaltener Kasten angeordnet ist. Alternativ wird hierzu vorgeschlagen, dass das Gehäuse an seiner Seite, insbesondere an seiner Oberseite, eine Ausnehmung aufweist, in der ein Klemmenkasten und/oder ein Elektronik enthaltener Kasten mit seiner Unterseite einliegt.

Vorzugsweise ist das Gehäuse facettenförmig. Hierdurch wird in vorteilhafter Weise eine besonders stabile Form des Elektromotorgehäuses realisiert. Bevorzugt besteht das Gehäuse aus Stahlblech, insbesondere Schwarzstahlblech, insbesondere innen und außen verzinktem Stahlblech.

Von größtem Vorteil ist es, wenn das Gehäuse durch die Abflachungen des Vielflachs selbsttragend ist. Vorzugsweise weist das Gehäuse 8 bis 16 Abflachungen bzw. Facetten, insbesondere 10 bis 14 Abflachungen, insbesondere 12 Abflachungen, bevorzugt weist der Vielflach eine gerade Zahl von Abflachungen auf.

In einer bevorzugten Ausführungsform entspricht das Verhältnis des Durchmessers des Gehäuses zur Länge des Gehäuses dem Verhältnis zweier ungerader Zahlen, insbesondere 9 zu 13. Vorzugsweise weist das Gehäuse eine Länge in seiner Achsrichtung von 100 bis 180 mm, insbesondere 130 mm und/oder einen Durchmesser von 70 mm bis 150 mm, insbesondere 90 mm auf.

Ein Ausführungsbeispiel der Erfindung ist in den Zeichnungen dargestellt und wird im folgenden näher erläutert. Es zeigen:
- Fig. 1: Eine Ausführungsform des erfindungsgemäßen Gehäuses eines Elektromotors in perspektivischer Ansicht
- Fig. 2: Das Gehäuse nach Figur 1 in der Frontansicht
- Fig. 3: Den Schnitt A-A nach Figur 2

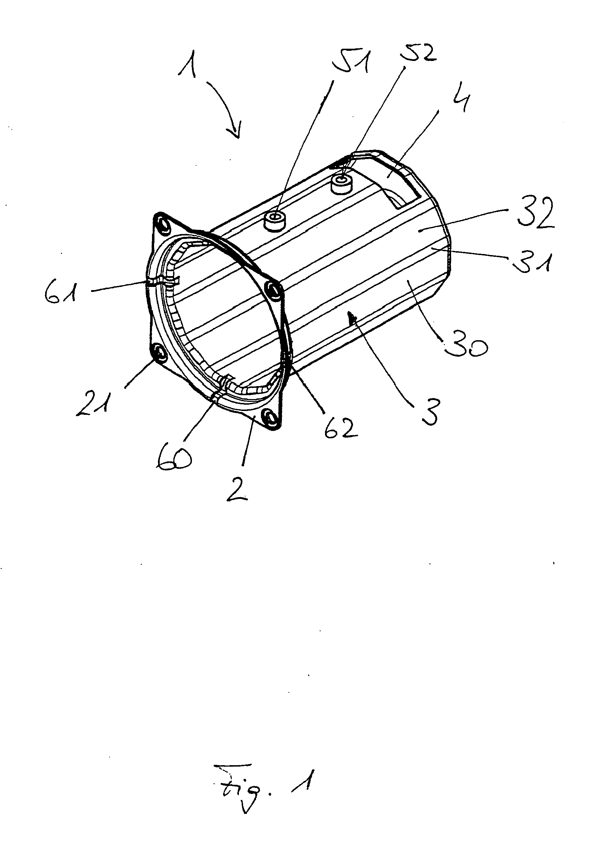

Fig. 1 zeigt eine Ausführungsform des erfindungsgemäßen Gehäuses 1 eines Elektromotors in perspektivischer Ansicht. Das Gehäuse 1 ist aus verzinktem Schwarzblech tiefgezogen, das eine Stärke von 0,5 mm bis 2,0 mm, vorzugsweise von 1,0 mm aufweist. Das topfförmige Gehäuse 1 weist einen Flansch 2 mit vier Durchgangslöchern 21 zur Aufnahme von Befestigungsschrauben oder dergleichen auf. Der Flansch 2 ist einstückig an den Mantel 3 des Gehäuses 1 angeformt und wird beim Tiefziehen des Gehäuses 1 innerhalb desselben Fertigungsschrittes ausgebildet.

Der topfförmige Teil des Gehäuses 1 weist in seinem Mantel 3 Abflachungen 30, 32 bzw. Facetten auf, die ebenfalls in dem Tiefziehprozess ausgebildet werden. In dem dargestellten Ausführungsbeispiel weist das Gehäuse 1 insgesamt 12 Abflachungen 30, 32 auf, die gleichmäßig in Umfangsrichtung angeordnet sind, so dass der Querschnitt des Mantels 3 einem gleichmäßige Zwölfeck entspricht. Die Übergangsbereiche 31 zwischen zwei Facetten bzw. Abflachungen 30, 32 sind nicht scharfkantig ausgebildet sondern weisen einen Radius auf. Dies führt zu einer Verringerung von Spannungen infolge des Tiefziehprozesses.

Auf seiner Oberseite weist das Gehäuse 1 eine Ausnehmung 4 zur Aufnahme bzw. eingestanzte Muttern 51, 52 zur Befestigung eines nicht dargestellten Klemmenkastens, der elektronische Bauteile zur Steuerung des Elektromotors aufweist.

Im Bereich des Flansches 2 sind Nuten 60, 61, 62 ausgebildet, durch sich ansammelnde Flüssigkeit wie Kondensat abfließen kann.

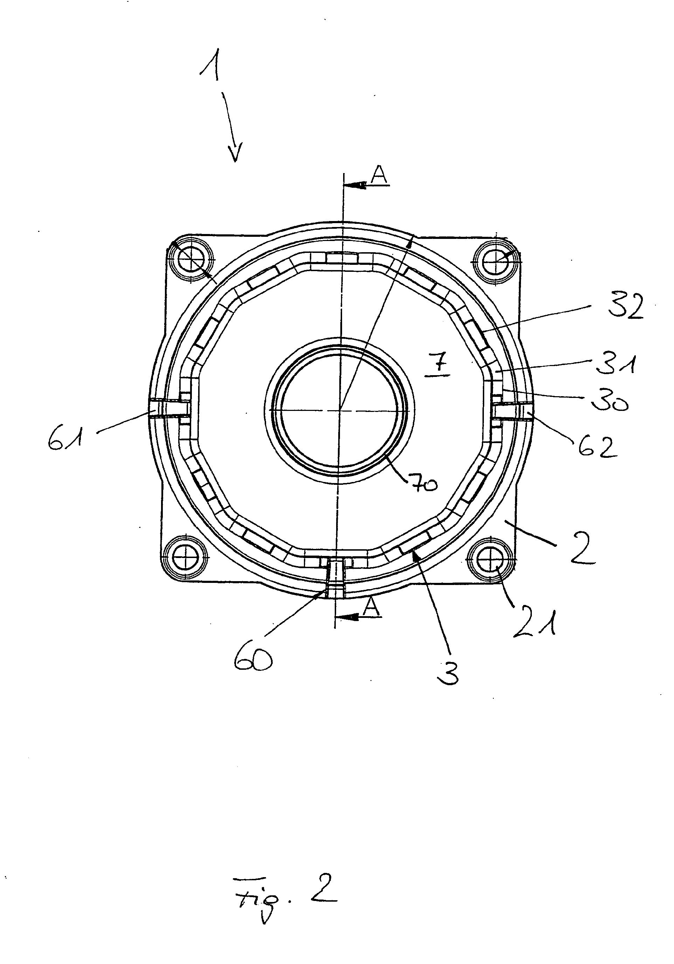

In Fig. 2 dargestellt ist das Gehäuse 1 nach Figur 1 in der Frontansicht. In dieser Ansicht gut erkennbar ist die gleichmäßige Anordnung der zwölf Abflachungen 30, 32 über dem Umfang des topfförmigen Gehäuseteils sowie die abgerundeten Übergangsbereiche 31 zwischen jeweils zwei Abflachungen 30, 32 des Mantels 3. In dem einstückig angeformten Flansch 2 sind insgesamt vier Befestigungslöcher 21 angeordnet.

Alternativ zu dem dargestellten Ausführungsbeispiel ist jedoch auch eine andere Anzahl der Abflachungen des Mantels des topfförmigen Gehäuseteiles sowie eine andere Anzahl von Befestigungslöchern in dem angeformten Flansch möglich.

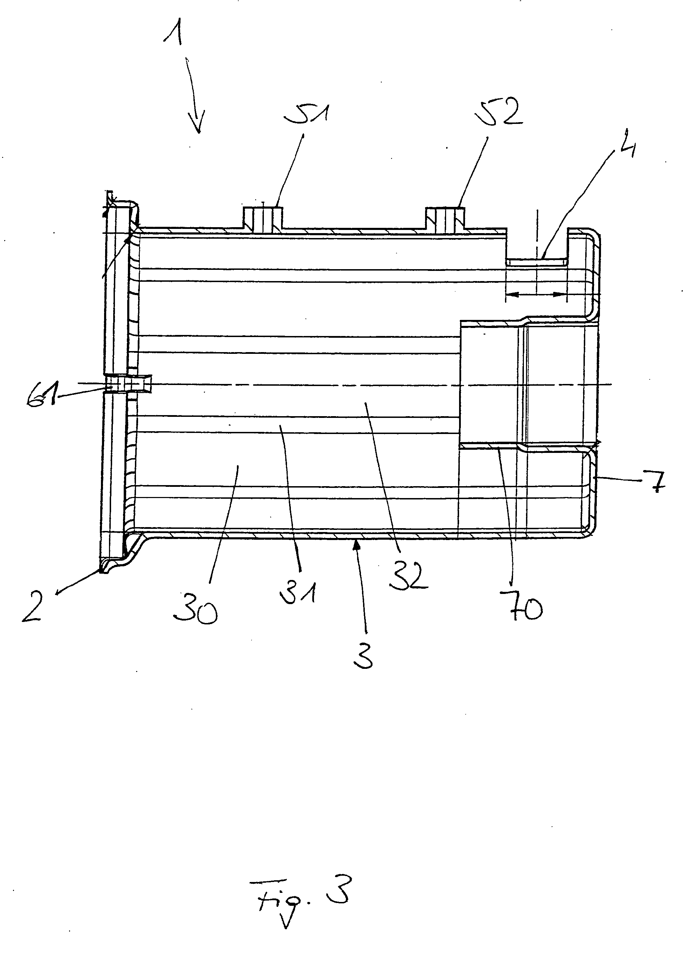

Fig. 3 zeigt den Schnitt A-A nach Figur 2. Der Boden 7 des topfförmigen Teils des Gehäuses 1 weist einen rohrförmigen, in das Gehäuseinnere ragenden Tragteil 70 auf, der der Aufnahme eines Lagers des Läufers des Elektromotors und/oder der Befestigung eines Spalttopfes dient.

## Patentansprüche

1. Gehäuse (1) eines Elektromotors, insbesondere für eine Motorkreiselpumpe, wobei das Gehäuse (1) aus Blech gefertigt ist, das durch Tiefziehen in seine Form gebracht wurde, **dadurch gekennzeichnet, dass** das Gehäuse (1) im Querschnitt senkrecht zu seiner Längsachse einen Vielflach bildet.

2. Gehäuse (1) nach Anspruch 1, **dadurch gekennzeichnet, dass** der Vielflach im Querschnitt ein regelmäßiges Vieleck ist.

3. Gehäuse (1) nach Anspruch 1 oder 2, **dadurch gekennzeichnet, dass** am Gehäuse (1) ein Flansch (2) einstückig angeformt ist.

4. Gehäuse (1) nach einem der vorherigen Ansprüche, **dadurch gekennzeichnet, dass** das Gehäuse (1) in Richtung auf seinen Boden (7) eine sich konisch verjüngende Form aufweist, insbesondere dass der Gehäusemantel (3) unter einem Winkel von 1,5° gegen die Gehäuseachse geneigt ist.

5. Gehäuse (1) nach einem der vorherigen Ansprüche, **dadurch gekennzeichnet, dass** an der offenen Seite des Gehäuses (1) zumindest eine Ausnehmung (60, 61, 62), insbesondere eine Nut vorgesehen ist.

6. Gehäuse (1) nach eine der vorherigen Ansprüche, **dadurch gekennzeichnet, dass** das Gehäuse (1) eine Wandstärke von 0,5 mm bis 2,0 mm, vorzugsweise von 1,0 mm bis 1,5 mm aufweist.

7. Gehäuse (1) nach einem der vorherigen Ansprüche, **dadurch gekennzeichnet, dass** am Gehäuse (1), insbesondere an seinem Flansch (2) ein selbsttragender Spalttopf befestigbar ist.

8. Gehäuse (1) nach einem der vorherigen Ansprüche, **dadurch gekennzeichnet, dass** das Gehäuse (1) an seiner Seite, insbesondere an seiner Oberseite, eine Ausnehmung (4) aufweist, in der ein Kunststoffeinsatz einliegt, auf dem der Klemmenkasten und/oder ein Elektronik enthalten er Kasten angeordnet ist.

9. Gehäuse (1) nach einem der vorherigen Ansprüche, **dadurch gekennzeichnet, dass** das Gehäuse (1) an seiner Seite, insbesondere an seiner Oberseite, eine Ausnehmung (4) aufweist, in der ein Klemmenkasten und/oder ein Elektronik enthaltener Kasten mit seiner Unterseite einliegt.

10. Gehäuse (1) nach einem der vorherigen Ansprüche, **dadurch gekennzeichnet, dass** das Gehäuse (1) facettenförmig ist.

11. Gehäuse (1) nach einem der vorherigen Ansprüche, **dadurch gekennzeichnet, dass** das Gehäuse (1) aus Stahlblech, insbesondere Schwarzstahlblech, insbesondere innen und außen verzinktem Stahlblech, besteht.

12. Gehäuse (1) nach einem der vorherigen Ansprüche, **dadurch gekennzeichnet, dass** das Gehäuse (1) durch die Abflachungen (30, 32) des Vielflachs selbsttragend ist.

13. Gehäuse (1) nach einem der vorherigen Ansprüche, **dadurch gekennzeichnet, dass** das Gehäuse (1) 8 bis 16 Abflachungen (30, 32), insbesondere 10 bis 14 Abflachungen (30, 32), insbesondere 12 Abflachungen (30, 32) aufweist.

14. Gehäuse (1) nach einem der vorherigen Ansprüche, **dadurch gekennzeichnet, dass** der Vielflach eine gerade Zahl von Abflachungen (30, 32) aufweist.

15. Gehäuse (1) nach einem der vorherigen Ansprüche, **dadurch gekennzeichnet, dass** das Verhältnis des Durchmessers des Gehäuses (1) zur Länge des Gehäuses (1) dem Verhältnis zweier ungerader Zahlen entspricht, insbesondere 9 zu 13.

16. Gehäuse (1) nach einem der vorherigen Ansprüche, **dadurch gekennzeichnet, dass** das Gehäuse (1) eine Länge in seiner Achsrichtung von 100 bis 180 mm, insbesondere 130 mm aufweist und/oder dass das Gehäuse (1) einen Durchmesser von 70 mm bis 150 mm, insbesondere 90 mm aufweist.
